# EUROPÄISCHE PATENTSCHRIFT

(11) **EP 1 897 722 B1**
(45) Veröffentlichungstag und Bekanntmachung des Hinweises auf die Patenterteilung: **10.10.2012**
(21) Anmeldenummer: 07015439.8
(22) Anmeldetag: 07.08.2007
(51) Int. Cl.: B60J 7/12, B60J 7/14

(54) **Verdeck für ein Cabriolet**
Top for a convertible
Capote pour un cabriolet

(30) Priorität: 08.09.2006 DE 102006042258
(43) Veröffentlichungstag der Anmeldung: 12.03.2008
(73) Patentinhaber: Dr. Ing. h.c. F. Porsche AG, 70435 Stuttgart (DE)
(72) Erfinder: Beierl, Dominik, 70825 Korntal-Münchingen (DE); Hermann, Felix, 71229 Leonberg (DE); Schulz, Lars, 15566 Schöneiche (DE); Armbruster, Reiner, 75417 Mühlacker (DE)

(56) Entgegenhaltungen:
- EP-A2- 1 127 725
- DE-C1- 10 006 296
- US-A- 5 246 262
- US-A1- 2004 084 929
- US-A1- 2004 108 747

## Beschreibung

Die vorliegende Erfindung betrifft ein Verdeck für ein Cabriolet, das einen Heckschreibenrahmen und zumindest einen, bei geschlossenem Verdeck in Fahrtrichtung davor gelegenen Dachabschnitt sowie ein seitliches Verdeckgestänge aufweist, gemäß dem Oberbegriff des Anspruchs 1. Ein solches Verdeck zeigt die DE 100 06 296 C1.

Aus der EP 0 521 307 B2 ist ein Faltverdeck mit einer sich zwischen vorderen Gestängeschenkeln befindlichen und in sich steifen und formstabilen Verdeckschale bekannt, welche über dem aufgeklappten Faltverdeck eine Schutzabdeckung bildet, so dass kein zusätzliches Persenning oder eine sonstige Abdeckung über dem Faltverdeck angebracht werden muss. Das Faltverdeck weist dabei einen Heckscheibenrahmen und zumindest einen, bei geschlossenem Verdeck in Fahrtrichtung davor gelegenen Dachabschnitt wie ein seitlich verlaufendes Verdeckgestänge auf.

Aus der DE 103 51 062 B3 ist ein Verdeck für ein Cabrioletfahrzeug bekannt, welches ein, zumindest ein starres Dachteil umfassendes Dachmodul aufweist, das mittels eines, ein Hauptviergelenk umfassenden Hauptlenkergetriebes mit dem Fahrzeug verbunden ist. Im Zuge einer Verdecköffnungsbewegung ist dabei das Dachmodul in einen heckseitigen Ablagebereich bewegbar. Zusätzlich zum Hauptviergelenk weist das bekannte Verdeck ein zweites, auf dem Hauptviergelenk aufbauendes Viergelenk auf, wobei das zweite Viergelenk mit dem Hauptviergelenk zwangsgesteuert gekoppelt ist.

Weitere Verdecke sind beispielsweise aus der EP 1 101 642 B1, aus der DE 196 13 356 C2 und aus der DE 102 05 935 B4 bekannt.

Die vorliegende Erfindung beschäftigt sich mit dem Problem, für ein Verdeck der gattungsgemäßen Art eine verbesserte bzw. eine andere Ausführungsform anzugeben, welche eine besonders platzsparende Ablageposition für das Verdeck ermöglicht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Verdeck mit einem Heckscheibenrahmen und zumindest zwei, bei geschlossenem Verdeck in Fahrtrichtung vor dem Heckscheibenrahmen gelegenen Dachabschnitten, den direkt vor dem Heckscheibenrahmen gelegenen Dachabschnitt gelenkig mit einem Verdeckgestänge zu koppeln, und zwar derart, dass dieser Dachabschnitt vom Verdeckgestänge bei einer Öffnungs- bzw. Schließbewegung angetrieben wird. Im Unterschied zu herkömmlichen Verdecken, bei welchen beispielsweise lediglich der in Fahrtrichtung gesehen vorderste Dachabschnitt mit dem Verdeckgestänge antriebsgekoppelt ist, sind beim erfindungsgemäßen Verdeck sämtliche Dachabschnitte mit dem Verdeckgestänge zumindest indirekt verbunden und dadurch angetrieben. Das Verdeckgestänge ist dabei in der Art eines Antriebsgestänges ausgebildet und leitet auf das Verdeckgestänge einwirkende Öffnungs- bzw. Schließkräfte an die einzelnen Dachabschnitte weiter. Darüber hinaus kann durch eine ausgeklügelte Kopplung des Verdeckgestänges mit den einzelnen Dachabschnitten eine besonders platzsparende Ablagestellung des erfindungsgemäßen Verdecks erzielt werden, so dass dieses bei geöffnetem Verdeck bauraumminimierend in einem Heckbereich des Cabriolets ablegt werden kann. Die besonders kompakte Ablagestellung resultiert darüber hinaus aus der Tatsache, dass im Vergleich zu herkömmlichen, aus dem Stand der Technik bekannten Verdecken, nunmehr drei Dachabschnitte vorgesehen sind, welche jeweils deutlich kürzere Abmessungen in Fahrzeuglängsrichtung aufweisen, als dies bei einem lediglich aus zwei Dachabschnitten bestehenden Verdeck der Fall ist.

Bei einer vorteilhaften Weiterbildung der erfindungsgemäßen Lösung ist das Verdeckgestänge derart ausgebildet, dass bei abgelegtem Verdeck der zweite Flächenspriegel, also der bei geschlossenem Verdeck direkt in Fahrtrichtung vor dem Heckscheibenrahmen gelegene Dachabschnitt, unter dem Heckscheibenrahmen und der Integraldachrahmen und der erste Flächenspriegel, d.h. die in Fahrtrichtung gesehenen vordersten Dachabschnitte, über dem Heckscheibenrahmen abgelegt sind. Bei dieser Ausführungsform besteht das erfindungsgemäße Verdeck aus drei Dachabschnitten und dem Heckscheibenrahmen, wobei bei einer Öffnungsbewegung des Verdecks der zweite Flächenspriegel unter den Heckscheibenrahmen und der Integraldachrahmen bzw. der erste Flächenspriegel über den Heckscheibenrahmen verstellt werden, wodurch eine besonders kompakte Ablagestellung bei geöffnetem Verdeck erreicht werden kann.

Bei einer weiteren vorteilhaften Ausführungsform weist das Verdeck einen, dieses zumindest teilweise überziehenden, flexiblen Überzug auf, der zum Erreichen einer vordefinierten Faltung des Verdecks beim Öffnen über ein elastisches Zugband mit dem ersten Flächenspriegel verbunden ist. Bei der Öffnungsbewegung des Verdecks kommt es zu einem Abheben des Überzugs von denjenigen Dachabschnitten, an denen dieser nicht angebunden ist. So ist der Überzug beispielsweise am zweiten Flächenspriegel an keiner Stelle angebunden, wodurch der zweite Flächenspriegel bei der Öffnungsbewegung des Verdecks unter den Heckscheibenrahmen verstellt werden kann. Das erwähnte elastische Zugband bewirkt beim Öffnen des Verdecks eine elastische Fixierung des Überzugs am entsprechenden Dachabschnitt, wodurch eine vordefinierte Faltbewegung des Überzugs erzwungen wird und sich dieses somit bei jeder Öffnungsbewegung in gleicher Weise faltet. Hierdurch kann eine im wesentlichen stets gleiche Öffnungs- und Schließbewegung sowie eine im wesentlichen stets gleiche Ablageposition des erfindungsgemäßen Verdecks erzwungen werden, wodurch ein besonders präzises Öffnen und Schließen bzw. Ablegen des Verdecks ermöglicht wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein erfindungsgemäßes Verdeck für ein Cabriolet in geschlossenem Zustand,
- Fig. 2: eine Schnittdarstellung durch das Verdeck in teilweise geöffnetem Zustand,
- Fig. 3: eine Schnittdarstellung des Verdecks in vollständig geöffnetem Zustand.

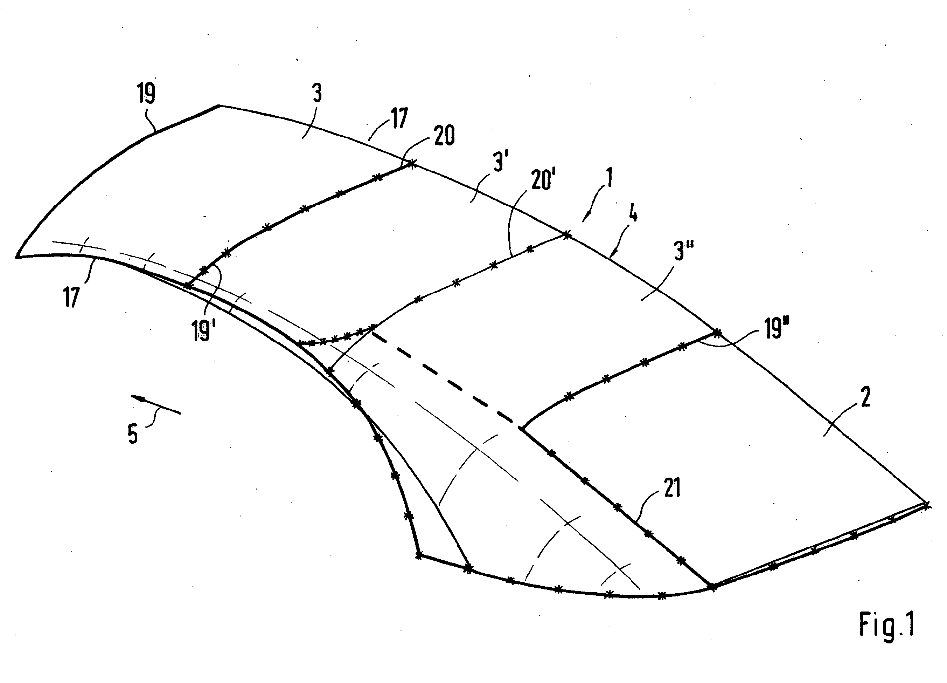

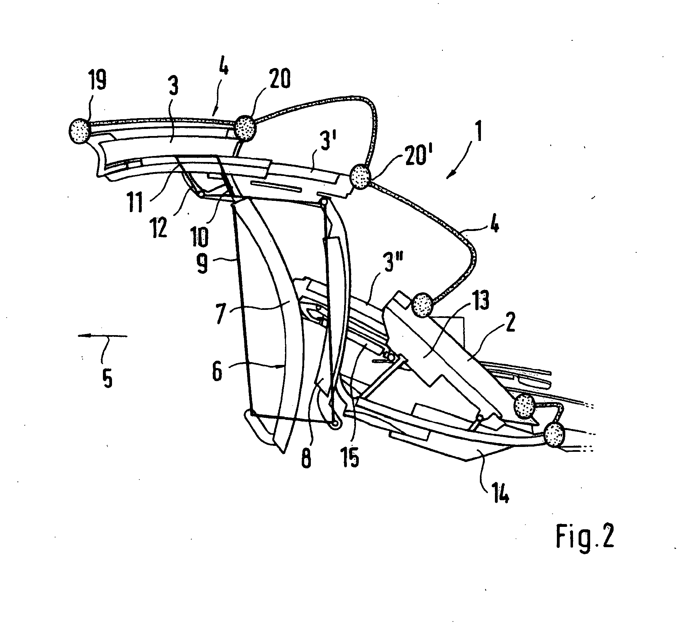

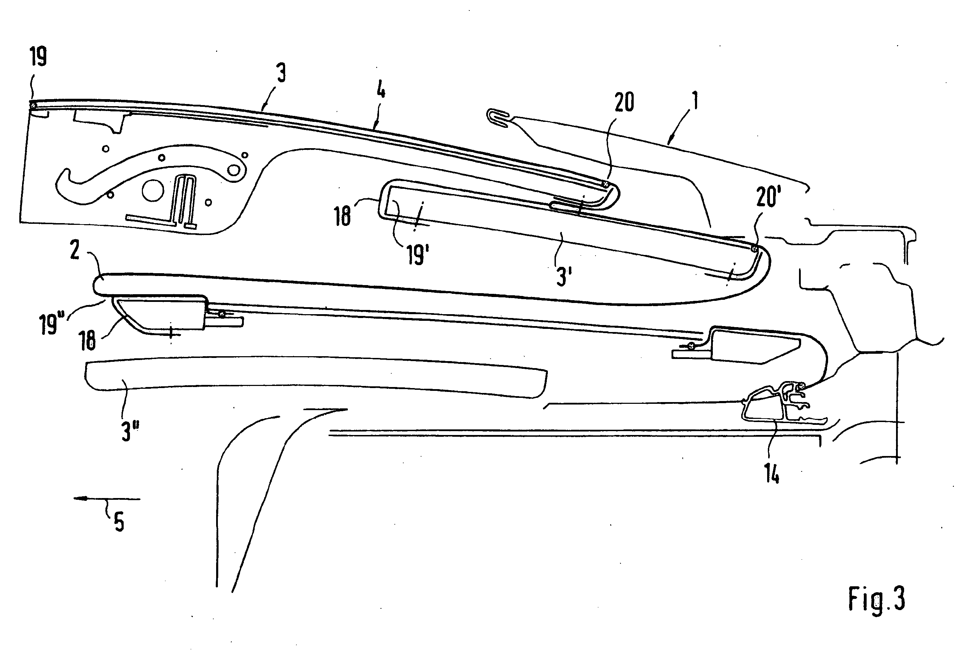

Entsprechend Fig. 1 weist ein erfindungsgemäßes Verdeck 1 eines im übrigen nicht dargestellten Cabriolets einen Heckscheibenrahmen 2 und drei, bei geschlossenem Verdeck 1 in Fahrtrichtung 5 davor gelegene Dachabschnitte 3, 3', 3" auf. Die einzelnen Dachabschnitte 3, 3', 3" sowie der Heckscheibenrahmen 2 bilden dabei bei geschlossenem Verdeck 1 eine durchgehende Dachkontur und sind üblicherweise von einem Überzug 4, vorzugsweise einem wasserabweisenden Überzug 4, überzogen. Der Überzug 4 überzieht dabei den Heckscheibenrahmen 2 selbstverständlich nur in einem, eine nicht dargestellte Heckscheibe umgebenden Bereich. Eine Längserstreckung der einzelnen Dachabschnitte 3, 3', 3" sowie des Heckscheibenrahmens 2 in Fahrzeuglängsrichtung 5 kann dabei den Fig. 2 und 3 entnommen werden. Die Fahrzeuglängsrichtung 5 ist dabei üblicherweise auch die Fahrtrichtung 5 des Cabriolets. Im weiteren wird der in Fahrtrichtung 5 vorderste Dachabschnitt 3 auch als Integraldachrahmen 3, der direkt dahinter gelegene Dachabschnitt 3' als erster Flächenspriegel 3' und der direkt hinter dem Dachabschnitt 3' gelegene Dachabschnitt 3" als zweiter Flächenspriegel 3" bezeichnet. Der Integraldachrahmen 3 sowie die beiden Flächenspriegel 3', 3" haben dabei insbesondere die Aufgabe, den Überzug 4 bei geschlossenem Verdeck 1 zu spannen und dadurch eine gleichmäßige Dachkontur zu bilden.

Wie der Fig. 2 zu entnehmen ist, weist das Verdeck 1 ein seitliches Verdeckgestänge 6 auf, welches gleichzeitig als Antriebsgestänge ausgebildet ist und bei einem Öffnungs- bzw. Schließvorgang des Verdecks 1 die Relatiwerstellung der einzelnen Dachabschnitte 3, 3', 3" sowie des Heckscheibenrahmens 2 bewirkt. Hierzu weist das Verdeckgestänge 6 auf jeder Fahrzeugseite einen Dachlenker 7 und einen in Fahrtrichtung 5 dahinter gelegenen Hauptlenker 8 auf. Angetrieben wird dabei üblicherweise lediglich der Dachlenker 7. Zusammen bilden der Dachlenker 7 und der Hauptlenker 8 ein erstes Viergelenk 9, auch Hauptviergelenk genannt, wobei sowohl der Dachlenker 7 als auch der Hauptlenker 8 jeweils einenends an einer fahrzeugfesten, nicht gezeigten Konsole und jeweils anderenends an dem direkt hinter dem vordersten Dachabschnitt 3, also dem Integraldachrahmen 3, angeordneten Dachabschnitt 3', also dem ersten Flächenspriegel 3', gelenkig gelagert sind. Eine Verlängerung 10 des Dachlenkers 7 bildet dabei einen Lenker eines zweiten Viergelenks 11, dessen weiterer Lenker 12 einerseits am Integraldachrahmen 3 und andererseits am ersten Flächenspriegel 3' gelenkig gelagert ist.

Am Dachlenker 7 ist zudem der Dachabschnitt 3", d.h. der zweite Flächenspriegel 3" gelenkig gelagert, wobei der zweite Flächenspriegel 3" anderenends in einer Führung 13 am Heckscheibenrahmen 2 zwangsgeführt ist. Bei einer Verstellbewegung des Verdecks 1 treibt somit der Dachlenker 7 nicht nur über das erste Viergelenk 9 den Hauptlenker 8, den ersten Flächenspriegel 3' und über das zweite Viergelenk 11 den Integraldachrahmen 3 an, sondern bewirkt auch eine Verstellbewegung des zweiten Flächenspriegels 3". Somit ist auch der zweite Flächenspriegel 3" vom Dachlenker 7 angetrieben.

Demgegenüber ist der Hauptlenker 8 direkt oder indirekt gelenkig mit einem Spannspriegel 14 und dem Heckscheibenrahmen 2 verbunden. Der Spannspriegel 14 bildet dabei einen rückwärtigen Abschluss des Verdecks 1. Generell ist dabei das Verdeckgestänge 6 so ausgebildet, dass bei geöffnetem, d.h. abgelegtem Verdeck 1 (vgl. Fig. 3) der zweite Flächenspriegel 3" unter dem Heckscheibenrahmen 2 abgelegt ist, während der erste Flächenspriegel 3' und der Integraldachrahmen 3 oberhalb des Heckscheibenrahmens 2 abgelegt sind. Dies ermöglicht eine besonders kompakte Ablagestellung des Verdecks 1 in geöffnetem Zustand, wodurch ein besonders ästhetischer Gesamteindruck erzielt werden kann.

Ebenfalls der Fig. 2 zu entnehmen ist, dass am zweiten Flächenspriegel 3" eine Verstelleinrichtung 15 vorgesehen ist, welche zu Beginn einer Öffnungsbewegung des geschlossenen Verdecks 1 eine nach Untenbewegung des zweiten Flächenspriegels 3" aus der Dachkontur heraus bewirkt und dadurch erst das Öffnen des Verdecks 1 ermöglicht.

Wie eingangs erwähnt, weist das Verdeck 1 einen, dieses zumindest teilweise überziehenden, flexiblen Überzug 4 auf, der mit den einzelnen Dachabschnitten 3, 3', 3" sowie dem Heckscheibenrahmen 2 und dem Spanspriegel 14 in folgender Weise verbunden ist. Entlang einer in Fahrzeugquerrichtung verlaufenden Vorderkante 19 des vordersten Dachabschnitts 3, d.h. des Integraldachrahmens 3, ist der Überzug 4 linienförmig mit dem Integraldachrahmen 3 verbunden, was gemäß der Fig. 1 durch eine entsprechende durchgezogene Linie und gemäß der Fig. 2 durch einen umrandeten Kreis dargestellt ist. Ebenso ist der Überzug 4 entlang in einer Fahrzeugquerrichtung verlaufenden Hinterkante 20 des vordersten Dachabschnitts 3 mit diesem verbunden. Die Verbindung zwischen dem Überzug 4 und der Hinterkante 20 des vordersten Dachabschnitts 3 erfolgt dabei jedoch über einen Zugstreifen 16 (vgl. Fig. 3), wodurch eine Spannung des Überzugs 4 im Bereich des Integraldachrahmens 3 erzeugt werden kann. Ein derartiger Zugstreifen 16 kann sich dabei über gesamte Breite des Integraldachrahmens 3 erstrecken. Desweiteren ist der Überzug 4 entlang zweier seitlicher Kanten 17 des Integraldachrahmens 3 linienförmig mit diesem verbunden.

Bezugnehmend auf den ersten Flächenspriegel 3' ist zu bemerken, dass der Überzug 4 entlang einer in Fahrzeugquerrichtung verlaufenden Hinterkante 20' des ersten Flächenspriegels 3' linienförmig mit diesem verbunden ist und zwar ebenfalls über einen sogenannten Zugstreifen 16. Im Bereich der Vorderkante 19' des ersten Flächenspriegels 3' ist der Überzug 4 über ein elastisches Zugband 18 (vgl. Fig. 3) mit dem ersten Flächenspriegel 3' verbunden, welcher beim Öffnen des Verdecks 1 eine vordefinierte Faltung des Überzugs 4 erzwingt.

Im Bereich des Heckscheibenrahmens 2 ist der Überzug 4 in Fahrzeugquerrichtung an einem hinteren und an einem vorderen Randbereich des Heckscheibenrahmens 2, genauer gesagt im Bereich zwischen der Heckscheibe und des Heckscheibenrahmens 2, mit dem Heckscheibenrahmen 2 fest verbunden. Darüber hinaus ist der Überzug 4 auch linienförmig entlang der Linie 21 in Fahrzeuglängsrichtung benachbart zur Heckscheibe mit dem Heckscheibenrahmen 2 verbunden (vgl. Fig. 1). Ebenso ist der Überzug 4 in Fahrzeugquerrichtung entlang des Spannspriegels 14 linienförmig mit diesem verbunden. An einer Vorderkante 19" des Heckscheibenrahmens 2 ist ebenfalls ein elastisches Zugband 18 vorgesehen, welches eine elastische Verbindung zwischen dem Überzug 4 und der Vorderkante 19" des Heckscheibenrahmens 2 bewirkt und welches ebenfalls beim Öffnen des Verdecks 1 eine vordefinierte Faltung des Überzugs 4, wie in Fig. 3 dargestellt, erzwingt. Festzuhalten bleibt, dass der Überzug 4 an keiner Stelle mit dem zweiten Flächenspriegel 3" verbunden ist, so dass sich dieser beim Öffnen des Verdecks 1 vom Überzug 4 lösen und unter den Heckscheibenrahmen 2 verstellen kann.

Durch die Ausgestaltung bzw. Anbindung der einzelnen Dachabschnitte 3, 3' und des Heckscheibenrahmens 2 an den Überzug 4 kann, wie eingangs erwähnt, bei geschlossenem Verdeck 1 eine durchgehende Dachkontur erzielt werden, wobei die Anbindung des Überzugs 4 an die einzelnen Dachabschnitte 3, 3' und den Heckscheibenrahmen 2 beim Öffnen des Verdecks 1, insbesondere die Anbindung über die Zugstreifen 16 bzw. die Zugbänder 18 eine stets gleiche, vordefinierte Faltung des Verdecks 1 erzwingen.

## Patentansprüche

1. Verdeck (1) für ein Cabriolet, das einen Heckscheibenrahmen (2) und zumindest einen, bei geschlossenern Verdeck (1) in Fahrtrichtung (5) davor gelegenen Dachabschnitt (3, 3', 3") sowie ein seitliches Verdeckgestänge (6) aufweist, wobei bei geschlossenem Verdeck (1) zwischen einem vorderen Dachabschnitt (3, 3') und dem Heckscheibenrahmen (2) ein weiterer Dachabschnitt (3") vorgesehen ist, der gelenkig mit dem Verdeckgestänge (6) verbunden und von diesem antreibbar ist, welches Verdeckgestänge (6) an jeder Fahrzeugseite einen Dachlenker (7) und einen in Fahrtrichtung (5) dahinter gelegenen Hauptlenker (8) aufweist, welche zusammen ein erstes Viergelenk (9) bilden, wobei der Dachlenker (7) und der Hauptlenker (8) jeweils einenends an einer fahrzeugfesten Konsole und jeweils anderenends an dem direkt hinter dem vordersten Dachabschnitt (3) angeordneten Dachabschnitt (3') gelenkig gelagert sind, und wobei der bei geschlossenem Verdeck (1) in Fahrtrichtung (5) direkt vor dem Heckscheibenrahmen (2) gelegene Dachabschnitt (3") gelenkig mit dem Dachlenker (7) des Verdeckgestänges (6) verbunden und von diesem antreibbar ist, **dadurch gekennzeichnet, dass** der Hauptlenker (8) direkt oder indirekt gelenkig mit einem Spannspriegel (14) und mit dem Heckscheibenrahmen (2) verbunden ist.

2. Cabriolet nach Anspruch 1, **dadurch gekennzeichnet, dass** das Verdeck (1) drei Dachabschnitte (3, 3', 3") und den Heckscheibenrahmen (2) aufweist, wobei der in Fahrtrichtung vorderste Dachabschnitt (3) als Integraldachrahmen (3) und die dahinter gelegenen Dachabschnitte (3', 3") als erster und zweiter Flächenspriegel (3', 3") ausgebildet sind.

3. Cabriolet nach Anspruch 2, **dadurch gekennzeichnet, dass** das Verdeckgestänge (6) so ausgebildet ist, dass bei abgelegtem Verdeck (1) der zweite Flächenspriegel (3") unter dem Heckscheibenrahmen (2) und der erste Flächenspriegel (3') und der Integraldachrahmen (3) über dem Heckscheibenrahmen (2) abgelegt sind.

4. Cabriolet nach Anspruch 1, **dadurch gekennzeichnet, dass** eine Verlängerung (10) des Dachlenkers (7) einen Lenker eines zweiten Viergelenks (11) bildet, dessen weiterer Lenker (12) einerseits an dem vordersten Dachabschnitt (3) und andererseits am direkt dahinter gelegenen Dachabschnitt (3') gelenkig gelagert ist.

5. Cabriolet nach einem der Ansprüche 1 bis 4, **dadurch gekennzeichnet, dass** das Verdeck (1) einen, dieses zumindest teilweise überziehenden flexiblen Überzug (4) aufweist.

6. Cabriolet nach Anspruch 5, **dadurch gekennzeichnet,**
- **dass** der Überzug (4) entlang einer in Fahrzeugquerrichtung verlaufenden Vorderkante (19) des vordersten Dachabschnitts (3) linienförmig mit diesem verbunden ist, und/oder
- **dass** der Überzug (4) entlang einer in Fahrzeugquerrichtung verlaufenden Hinterkante (20) des vordersten Dachabschnitts (3) mit diesem über einen Zugstreifen (16) verbunden ist, und/oder
- **dass** der Überzug (4) entlang zweier seitlicher Kanten (17) des vordersten Dachabschnitts (3) linienförmig mit diesem verbunden ist.

7. Cabriolet nach einem der Ansprüche 5 oder 6, **dadurch gekennzeichnet, dass** der Überzug (4) entlang einer in Fahrzeugquerrichtung verlaufenden Hinterkante (20') des ersten Flächenspriegel (3') linienförmig mit diesem über einen Zugstreifen (16) verbunden ist.

8. Cabriolet nach einem der Ansprüche 5 bis 7, **dadurch gekennzeichnet, dass** der Überzug (4) in Fahrzeugquerrichtung an einem hinteren Randbereich des Heckscheibenrahmens (2) und entlang des Spannspriegels (14) linienförmig mit diesen verbunden ist.

9. Cabriolet nach einem der Ansprüche 5 bis 8, **dadurch gekennzeichnet,**
- **dass** der Überzug (4) zum Erreichen einer vordefinierten Faltung des Überzugs (4) beim Öffnen über ein elastisches Zugband (18) mit dem ersten Flächenspriegel (3') verbunden ist, und/oder
- **dass** der Überzug (4) zum Erreichen einer vordefinierten Faltung des Überzugs (4) beim Öffnen über ein elastisches Zugband (18) mit dem Heckscheibenrahmen (2) verbunden ist.

## Claims

1. Top (1) for a convertible, which has a rear window frame (2) and at least one roof section (3, 3', 3") placed in front of it in the direction of travel (5) when the top (1) is closed, and a lateral top linkage (6), wherein, when the top (1) is closed, a further roof section (3") which is connected to the top linkage (6) in an articulated manner and can be driven by the latter is provided between a front roof section (3, 3') and the rear window frame (2), which top linkage (6) on each side of the vehicle has a roof link (7) and a main link (8) placed behind it in the direction of travel (5), which links together form a first four-bar linkage (9), the roof link (7) and the main link (8) each being mounted in an articulated manner at one end on a bracket fixed on the vehicle and at the other end on the roof section (3') arranged directly behind the frontmost roof section (3), and wherein the roof section (3") which is placed directly in front of the rear window frame (2) in the direction of travel (5) when the top (1) is closed is connected in an articulated manner to the roof link (7) of the top linkage (6) and can be driven by the latter, **characterized in that** the main link (8) is connected directly or indirectly in an articulated manner to a clamping bow (14) and to the rear window frame (2).

2. The convertible according to Claim 1, **characterized in that** the top (1) has three roof sections (3, 3', 3") and the rear window frame (2), the frontmost roof section (3) in the direction of travel being designed as an integral roof frame (3) and the roof sections (3', 3") placed behind it being designed as first and second surface bows (3', 3").

3. The convertible according to Claim 2, **characterized in that** the top linkage (6) is designed in such a manner that, when the top (1) is put away, the second surface bow (3") is put away below the rear window frame (2), and the first surface bow (3') and the integral roof frame (3) are put away above the rear window frame (2).

4. The convertible according to Claim 1, **characterized in that** an extension (10) of the roof link (7) forms a link of a second four-bar linkage (11), the further link (12) of which is mounted in an articulated manner firstly on the frontmost roof section (3) and secondly on the roof section (3') placed directly behind it.

5. The convertible according to one of Claims 1 to 4, **characterized in that** the top (1) has a flexible covering (4) at least partially covering it.

6. The convertible according to Claim 5, **characterized**
- **in that** the covering (4) is connected linearly to the frontmost roof section (3) along a front edge (19) of the same that runs in the transverse direction of the vehicle, and/or
- **in that** the covering (4) is connected via a pull strip (16) to the frontmost roof section (3) along a rear edge (20) of the same that runs in the transverse direction of the vehicle, and/or
- **in that** the covering (4) is connected linearly to the frontmost roof section (3) along two lateral edges (17) of the same.

7. The convertible according to either of Claims 5 and 6, **characterized in that** the covering (4) is connected via a pull strip (16) linearly to the first surface bow (3') along a rear edge (20') of the same that runs in the transverse direction of the vehicle.

8. The convertible according to one of Claims 5 to 7, **characterized in that** the covering (4) is connected linearly at a rear edge region of the rear window frame (2) and along the clamping bow (14) to said rear window frame and clamping bow in the transverse direction of the vehicle.

9. The convertible according to one of Claims 5 to 8, **characterized**
- **in that** in order to achieve a predefined folding of the covering (4) during opening, the covering (4) is connected to the first surface bow (3') via an elastic pull band (18), and/or
- **in that** in order to achieve a predefined folding of the covering (4) during opening, the covering (4) is connected to the rear window frame (2) via an elastic pull band (18).

## Revendications

1. Capote (1) pour un cabriolet, qui présente un cadre de lunette arrière (2) et au moins une partie de capote (3, 3', 3") disposée devant celui-ci dans la direction de déplacement (5) lorsque la capote (1) est fermée ainsi qu'une tringlerie de capote latérale (6), dans laquelle il est prévu, lorsque la capote (1) est fermée, entre une partie de capote avant (3, 3') et le cadre de lunette arrière (2), une autre partie de capote (3"), qui est reliée de façon articulée à la tringlerie de capote (6) et qui peut être entraînée par celle-ci, tringlerie de capote (6) qui présente sur chaque côté du véhicule une bielle de capote (7) et une bielle principale (8) disposée derrière celle-ci dans la direction de déplacement (5), qui forment ensemble un premier quadrilatère articulé (9), dans laquelle la bielle de capote (7) et la bielle principale (8) sont montées de façon articulée respectivement par une extrémité sur une console solidaire du véhicule et respectivement par l'autre extrémité sur la partie de capote (3') disposée directement derrière la partie de capote la plus antérieure (3), et dans laquelle la partie de capote (3") située directement devant le cadre de lunette arrière (2) dans la direction de déplacement (5) lorsque la capote (1) est fermée est reliée de façon articulée à la bielle de capote (7) de la tringlerie de capote (6) et peut être entraînée par celle-ci, **caractérisée en ce que** la bielle principale (8) est reliée de façon articulée, directement ou indirectement, à un arceau de serrage (14) et au cadre de lunette arrière (2).

2. Cabriolet selon la revendication 1, **caractérisé en ce que** la capote (1) présente trois parties de capote (3, 3', 3") et le cadre de lunette arrière (2), dans lequel la partie de capote la plus antérieure (3) dans la direction de déplacement est réalisée sous la forme d'un cadre de capote intégral (3) et les parties de capote (3', 3") situées derrière celle-ci sont réalisées sous la forme d'un premier et d'un deuxième arceaux plats (3', 3").

3. Cabriolet selon la revendication 2, **caractérisé en ce que** la tringlerie de capote (6) est réalisée de telle manière que, lorsque la capote (1) est escamotée, le deuxième arceau plat (3") soit escamoté sous le cadre de lunette arrière (2) et que le premier arceau plat (3') et le cadre de capote intégral (3) soient escamotés au-dessus du cadre de lunette arrière (2).

4. Cabriolet selon la revendication 1, **caractérisé en ce qu'**un prolongement (10) de la bielle de capote (7) forme une bielle d'un deuxième quadrilatère articulé (11), dont une autre bielle (12) est montée de façon articulée d'une part à la partie de capote la plus antérieure (3) et d'autre part à la partie de capote (3') située directement derrière celle-ci.

5. Cabriolet selon l'une quelconque des revendications 1 à 4, **caractérisé en ce que** la capote (1) présente un recouvrement flexible (4) qui la recouvre au moins en partie.

6. Cabriolet selon la revendication 5, **caractérisé en ce que**
- le recouvrement (4) est assemblé sous forme linéaire avec la partie de capote la plus antérieure (3) le long d'un bord avant (19) de celle-ci s'étendant dans la direction transversale du véhicule, et/ou
- le recouvrement (4) est assemblé à la partie de capote la plus antérieure (3) au moyen d'une bande de traction (16) le long d'un bord arrière (20) de celle-ci s'étendant dans la direction transversale du véhicule, et/ou
- le recouvrement (4) est assemblé sous forme linéaire à la partie de capote la plus antérieure (3) le long de deux bords latéraux (17) de celle-ci.

7. Cabriolet selon l'une quelconque des revendications 5 ou 6, **caractérisé en ce que** le recouvrement (4) est assemblé sous forme linéaire au premier arceau plat (3') au moyen d'une bande de traction (16) le long d'un bord arrière (20') de celui-ci s'étendant dans la direction transversale du véhicule.

8. Cabriolet selon l'une quelconque des revendications 5 à 7, **caractérisé en ce que** le recouvrement (4) est assemblé sous forme linéaire à un bord arrière du cadre de lunette arrière (2) et le long de l'arceau de serrage (14) dans la direction transversale du véhicule.

9. Cabriolet selon l'une quelconque des revendications 5 à 8, **caractérisé en ce que**
- le recouvrement (4) est assemblé au premier arceau plat (3') au moyen d'une bande de traction élastique (18) pour opérer un pliage prédéfini du recouvrement (4) lors de l'ouverture, et/ou
- le recouvrement (4) est assemblé au cadre de lunette arrière (2) au moyen d'une bande de traction élastique (18) pour opérer un pliage prédéfini du recouvrement (4) lors de l'ouverture.
